# FASCICULE DE BREVET EUROPEEN

(11) **EP 1 032 509 B1**
(45) Date de publication et mention de la délivrance du brevet: **21.02.2007**
(21) Numéro de dépôt: 99969382.3
(22) Date de dépôt: 24.09.1999
(51) Int. Cl.: B60Q 1/04

(54) **ELEMENT DE STRUCTURE AVEC AU MOINS UN PROJECTEUR, ET PROCEDE DE MONTAGE D'UN TEL ENSEMBLE DANS LA CARROSSERIE D'UN VEHICULE AUTOMOBILE**
STRUKTURELEMENT MIT ZUMINSTENS EINEM KFZ-SCHEINWERFER UND MONTAGEVERFAHREN AN DIE KAROSSERIE
STRUCTURAL ELEMENT WITH AT LEAST A HEADLAMP, AND METHOD FOR MOUNTING SUCH AN ASSEMBLY IN A MOTOR VEHICLE BODY

(30) Priorité: 24.09.1998 FR 9811931
(43) Date de publication de la demande: 06.09.2000
(73) Titulaire: VALEO VISION, 93000 Bobigny (FR); VALEO THERMIQUE MOTEUR, 78321 La Verrière (FR)
(72) Inventeur: GUYOMARD, Jean-Nicolas, F-27930 Le Mesnil Fuguet (FR)
(74) Mandataire: Rolland, Jean-Christophe
(86) Numéro de dépôt international: PCT/FR1999/002281
(87) Numéro de publication internationale: WO 2000/017007

(56) Documents cités:
- EP-A- 0 026 402
- FR-A- 2 246 437
- FR-A- 2 576 575
- US-A- 4 466 646

## Description

La présente invention a trait d'une façon générale au montage des projecteurs dans les véhicules automobile.

De façon classique, un projecteur est monté dans un véhicule en étant fixé par des moyens appropriés sur des parties de carrosserie du véhicule. Ces moyens de fixation sont en général conçus pour autoriser un réglage de la position du projecteur, en particulier pour que sa glace occupe la position convenue , en général en affleurement et essentiellement dans la continuité, par rapport à la carrosserie entourant l'ouverture formée dans celle-ci pour recevoir le projecteur.

Pour bien caler le projecteur dans cette position, il est connu de prévoir des moyens de butée entre le boîtier du projecteur et des aménagements ad hoc de la carrosserie, définissant une position de référence, et des moyens élastiques pour solliciter le projecteur vers cette position de référence.

Le document EP 0 026 402 montre un ensemble d'un élément de structure de véhicule et d'un projecteur dudit véhicule, qui est défini par
- l'élément de structure et le projecteur possèdent des aménagements homologues pour le montage du projecteur sur ledit élément de structure,
- le projecteur et la carrosserie possèdent des aménagements homologues de butée définissant une position de référence du projecteur, et
- il est prévu un moyen élastique pour solliciter le projecteur selon desdits aménagements de butée.

Ce principe de calage, efficace lorsque le projecteur est monté directement dans la carrosserie, est en revanche inapplicable lorsque le projecteur est monté sur un élément de structure ayant vocation tout d'abord à recevoir le projecteur, puis à être monté dans la carrosserie. En effet, même si l'on réalise un référencement convenable du projecteur par rapport à cet élément de structure, les tolérances de fabrication et jeux de montage intervenant entre ledit élément de structure et la carrosserie sont dans la pratique tels que le projecteur n'occupera que fortuitement la position recherchée vis-à-vis de la partie de la carrosserie adjacente au projecteur. Alors que c'est précisément par rapport à cette partie de carrosserie que l'on cherche à bien positionner le projecteur.

La présente invention vise à pallier ces limitations de l'état de la technique. Elle vise plus précisément à permettre de profiter des avantages d'un montage préalable du projecteur sur un élément de structure séparé de la carrosserie et ensuite rapporté sur celle-ci, tout en assurant un positionnement correct du projecteur par rapport à la carrosserie qui l'avoisine.

Ainsi l'invention propose selon un premier aspect un ensemble d'un élément de structure de véhicule et d'un projecteur dudit véhicule, caractérisé en ce que :
- ledit élément de structure est séparé de la carrosserie du véhicule et apte à être rapporté sur celle-ci,
- l'élément de structure et le projecteur possèdent des aménagements homologues pour le montage du projecteur sur ledit élément de structure en laissant audit projecteur au moins un degré de liberté selon une direction donnée ;
- le projecteur et la carrosserie possèdent des aménagements homologues de butée définissant une position de référence du projecteur selon ladite direction donnée, et
- il est prévu un moyen élastique opérant entre ledit élément de structure et ledit projecteur pour solliciter le projecteur selon ladite direction donnée à l'encontre de l'effort de réaction desdits aménagements de butée sur le projecteur.

Des aspects préférés, mais non limitatifs, de l'ensemble selon l'invention sont les suivants :
- ladite direction donnée est une direction généralement horizontale et transversale à l'axe du véhicule.
- lesdits aménagements homologues de butée comprennent un aménagement formé sur une partie d'aile de la carrosserie de façon adjacente à un bord extérieur d'une glace du projecteur.
- lesdits aménagements homologues de montage comprennent des pattes d'accrochage formées sur le projecteur et coopérant avec des orifices d'accrochage formés dans des régions correspondantes de l'élément de structure.
- il est prévu également des seconds aménagements homologues de butée définissant une position de référence du projecteur selon une seconde direction donnée et aptes à entrer en jeu lors de la mise en oeuvre desdits aménagements homologues de montage.
- le moyen élastique est constitué par un ressort-lame monté sur l'élément de structure.
- le moyen élastique est constitué par un ressort-lame venu de matière avec l'élément de structure.
- l'élément de structure constitue un support de face avant de véhicule et reçoit une paire de projecteurs gauche et droit.

Selon un deuxième aspect, l'invention propose un procédé de montage d'un ensemble comprenant un élément de structure de véhicule formant support de face avant et d'une paire de projecteurs, caractérisé en ce qu'il comprend les étapes suivantes :
- montage des projecteurs sur ledit élément de structure en laissant auxdits projecteurs au moins un degré de liberté selon une direction respective donnée, chaque projecteur étant alors assujetti à l'action d'un moyen élastique respectif le sollicitant dans ladite direction respective donnée,
- montage de l'ensemble ainsi obtenu dans la carrosserie du véhicule, ladite carrosserie sollicitant au cours de ce montage les projecteurs à l'encontre des sollicitations exercées par lesdits moyens élastiques respectifs pour amener lesdits projecteurs dans des positions de référence données.

Des aspects préférés, mais non limitatifs, du procédé ci-dessus sont les suivants :
- lesdites directions respectives données sont une même direction généralement horizontale et transversale à l'axe du véhicule.
- la sollicitation des projecteurs au cours de l'étape de montage de l'ensemble est réalisée par des aménagements formé sur des parties d'aile de la carrosserie de façon respectivement adjacente aux bords extérieurs des glaces des projecteurs.
- ladite étape de montage des projecteurs s'effectue par translation et accrochage selon une direction différente de chaque direction respective donnée.
- la translation de chaque projecteur est effectuée jusqu'à une position de butée constituant une position de référence du projecteur selon ladite direction différente.

D'autres aspects, buts et avantages de la présente invention apparaîtront mieux à la lecture de la description d'une forme de réalisation préférée de celle-ci, donnée à titre d'exemple non limitatif et faite en référence aux dessins annexés, sur lesquels :
la figure 1 est une vue de dessus schématique d'un ensemble formé d'une partie d'un élément de structure du véhicule et d'un projecteur avant,
la figure 2 est une vue en section verticale schématique illustrant des aménagements de retenue et de calage entre l'élément de structure et le projecteur, et
la figure 3 est une vue schématique en perspective de l'élément de structure.

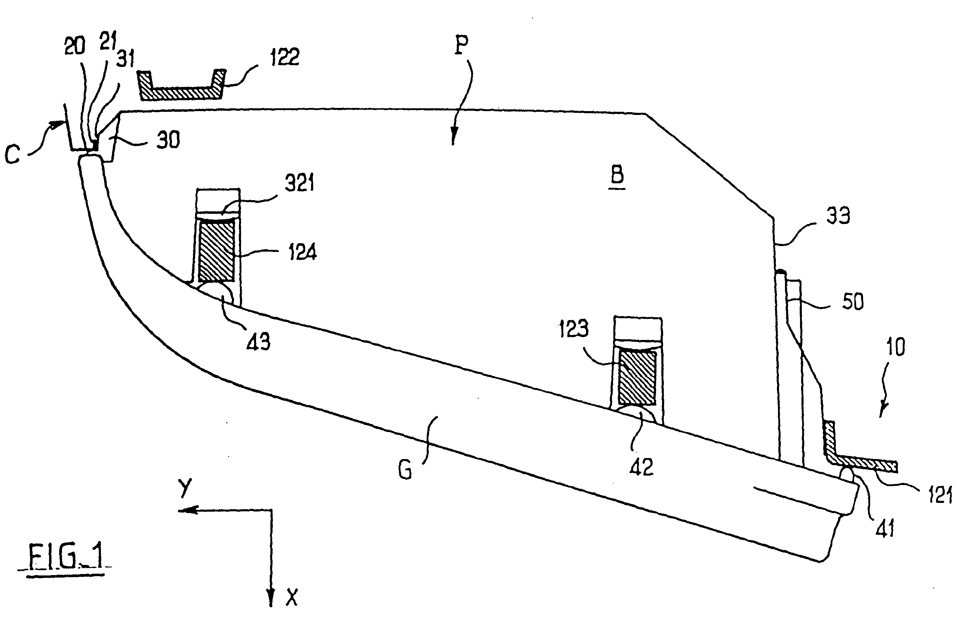

En référence maintenant aux dessins, on a représenté sur la figure 1 un projecteur P qui de façon classique comporte un boîtier B fermé par une glace G. Ce projecteur est destiné à être fixé non pas sur des aménagements appartenant à la carrosserie du véhicule, mais sur un élément de structure séparé 10, dit « support de face avant », destiné à occuper la région avant du véhicule sensiblement sur toute sa largeur. Un tel support de face avant peut être réalisé en tôle métallique pliée, en matière plastique injectée, en matériau composite, etc...

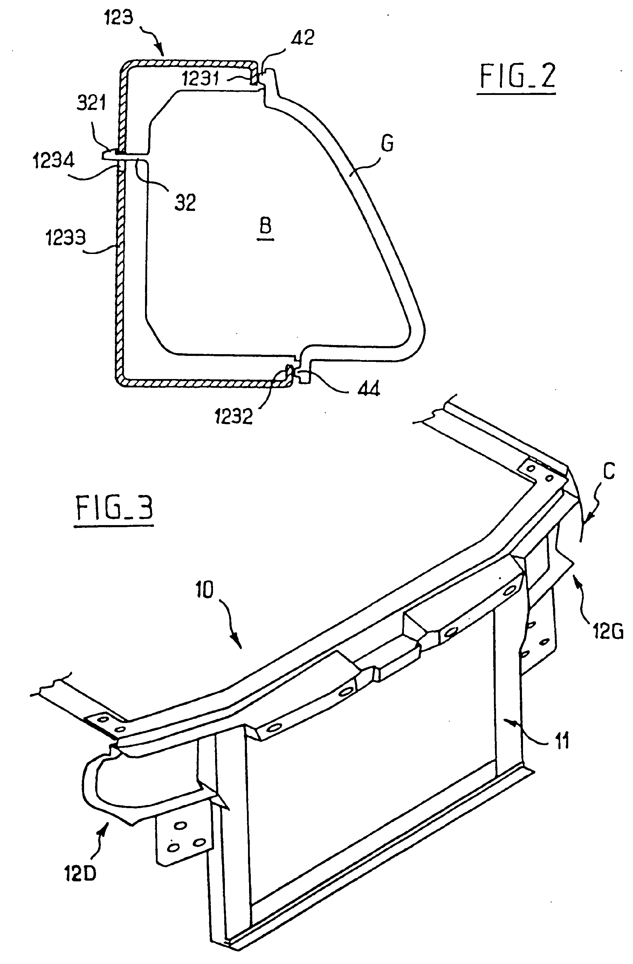

Un tel support de face avant 10 est schématiquement illustré sur la figure 3 et comporte pour l'essentiel un cadre central 11 destiné à la fixation d'un radiateur du véhicule et le cas échéant des équipements associés (groupe moto-ventilateur, etc.), et deux prolongements latéraux 12G, 12D, formant aussi des sortes de cadres, destinés au montage de deux projecteurs gauche et droit, non illustrés sur cette figure.

Sur la figure 1 sont représentées schématiquement différentes parties du prolongement 12D destiné au projecteur P. Ces aménagements comprennent notamment une cornière 121 destinée à jouxter le projecteur du côté intérieur de celui-ci, une cornière arrière 122, et des parties intermédiaires 123, 124 destinées, comme on le verra en détail plus loin, à assurer l'accrochage et le référencement de la position du projecteur P

On a également représenté sur la figure 1 la région de la carrosserie C adjacente au bord extérieur de la glace G du projecteur. Cette carrosserie possède à cet endroit un rebord rentrant 20, s'étendant sensiblement à angle droit par rapport à l'extérieur de la carrosserie, ce rebord 20 étant suivi d'un autre rebord 21 encore plié sur environ 90° dans le même sens.

Le rebord 21 définit une butée destinée à assurer que le projecteur occupe, lors de son montage, une position de référence convenue selon l'axe transversal Y, A cet effet, le boîtier B du projecteur possède un aménagement tel qu'une membrure 30 dont un bord extérieur 31 est destiné à venir s'appuyer contre ledit rebord 21.

Pour effectuer ce référencement, le boîtier du projecteur reçoit une sollicitation en direction de l'extérieur du véhicule, c'est-à-dire essentiellement de la droite vers la gauche sur la figure 1. Cette sollicitation est ici exercée par un ressort-lame 50 qui est monté sur la cornière 121 de l'élément de structure 10 et qui s'applique contre le flanc 33 du boîtier B qui est situé à l'opposé de la membrure 30. Dans le cas où l'élément de structure 10 est réalisé en un matériau possédant une flexibilité adéquate, telle qu'une matière plastique ou composite, le ressort-lame 50 peut être avantageusement venu de matière sur cet élément de structure, ce qui permet de supprimer une pièce.

Grâce à un tel agencement, il est possible de monter le projecteur sur une pièce du véhicule qui est distincte de la carrosserie elle-même, tout en assurant un référencement convenable de la position du projecteur selon Y par rapport à la carrosserie au niveau de l'aile adjacente.

Maintenant en référence aux figures 2 et 3, on va décrire les moyens qui permettent d'une part d'accrocher le projecteur P sur le support de face avant 10, et d'autre part les moyens associés qui permettent d'assurer un référencement convenable de la position du projecteur P selon la direction longitudinale du véhicule (axe X).

Ces moyens comprennent d'une part une série de pattes d'accrochage telles que 32 en saillie vers l'arrière à partir du boîtier B, chaque patte 32 possédant à son extrémité libre un décrochement défini par une dent d'accrochage 321. Chaque patte est apte à être engagée dans une ouverture associée 1234 formée dans une zone 1233 de la partie intermédiaire 123 (ou 124), pour ainsi retenir le projecteur vis-à-vis d'un déplacement vers l'avant du véhicule selon la direction X.

Des bossages tels que 41, 42, 43, 44 sont par ailleurs formés soit au sur le boîtier B, soit sur le pied de la glace G, en faisant saillie vers l'arrière, et sont aptes à s'appuyer selon la direction X contre des aménagements tels que 1231, 1232 formés dans la partie intermédiaire 123 (respectivement 124).

En dimensionnant ces organes de façon appropriée, on fait ainsi en sorte que la retenue du projecteur selon X s'effectue sans jeu.

On observera ici que les ouvertures telles que 1234 pour les pattes d'accrochage 32, ainsi que les zones d'appui telles que 1231, 1232 pour les bossages formés sur le boîtier ou la glace, sont conformées et dimensionnées de manière à autoriser le déplacement du projecteur selon la direction Y pour son calage à l'aide du ressort-lame 50 lorsque l'ensemble constitué du support de face avant 10 et des projecteurs, et le cas échéant des autres organes portés par le support de face avant, est monté dans le véhicule.

On notera à cet égard que l'assemblage s'effectuant de façon préférée :
- en montant tout d'abord les projecteurs P sur le support de face avant 10, en faisant intervenir les pattes d'accrochage 32 (les projecteurs sont alors calés selon la direction X) ;
- puis en montant cet ensemble dans le véhicule, par l'avant ou par l'arrière, en accostant les côtés des projecteurs au niveau des bords d'appui 31 sur les butées de positionnement 21 adjacentes ; ce montage sollicite les projecteurs à l'encontre des efforts exercés par les ressorts associés, de manière à bien caler les projecteurs selon la direction Y ;
- puis si nécessaire en confirmant la fixation des projecteurs dans la position ainsi obtenue à l'aide de tout dispositif de fixation réglable approprié.

Le cas échéant, les moyens de sollicitation élastique 50 et de butée 21, 31 peuvent également être mis en oeuvre pour assurer un référencement du projecteur selon la direction verticale (axe Z).

Bien entendu, la présente invention n'est nullement limitée à la forme de réalisation décrite et représentée, mais l'homme du métier saura y apporter toute variante ou modification conforme à son esprit.

## Revendications

1. Ensemble d'un élément de structure (10) de véhicule et d'un projecteur (P) dudit véhicule, **caractérisé en ce que** :
- ledit élément de structure (10) est séparé de la carrosserie du véhicule (C) et apte à être rapporté sur celle-ci.
- ledit élément de structure est un support de face avant,
- l'élément de structure et le projecteur possèdent des aménagements homologues (1234, 32) pour le montage du projecteur sur ledit élément de structure en laissant audit projecteur au moins un degré de liberté selon une direction donnée (Y);
- le projecteur (P) et la carrosserie (C) possèdent des aménagements homologues de butée (31, 21) définissant une position de référence du projecteur selon ladite direction donnée (Y), et
- il est prévu un moyen élastique (50) opérant entre ledit élément de structure (10) et ledit projecteur pour solliciter le projecteur selon ladite direction donnée à l'encontre de l'effort de réaction desdits aménagements de butée sur le projecteur.

2. Ensemble selon la revendication 1, **caractérisé en ce que** ladite direction donnée (Y) est une direction généralement horizontale et transversale à l'axe du véhicule.

3. Ensemble selon la revendication 2, **caractérisé en ce que** lesdits aménagements homologues de butée comprennent un aménagement (21) formé sur une partie d'aile de la carrosserie (C) de façon adjacente à un bord extérieur d'une glace (G) du projecteur.

4. Ensemble selon l'une des revendications 1 à 3, **caractérisé en ce que** lesdits aménagements homologues de montage comprennent des pattes d'accrochage (32) formées sur le projecteur et coopérant avec des orifices d'accrochage (1234) formés dans des régions correspondantes de l'élément de structure (10).

5. Ensemble selon la revendication 4, **caractérisé en ce qu'**il est prévu également des seconds aménagements homologues de butée (41-44 ; 1231, 1232) définissant une position de référence du projecteur selon une seconde direction donnée (X) et aptes à entrer en jeu lors de la mise en oeuvre desdits aménagements homologues de montage.

6. Ensemble selon l'une des revendications 1 à 5, **caractérisé en ce que** le moyen élastique (50) est constitué par un ressort-lame monté sur l'élément de structure (10).

7. Ensemble selon l'une des revendications 1 à 5, **caractérisé en ce que** le moyen élastique (50) est constitué par un ressort-lame venu de matière avec l'élément de structure (10).

8. Ensemble selon l'une des revendications 1 à 7, **caractérisé en ce que** l'élément de structure (10) constitue un support de face avant de véhicule et reçoit une paire de projecteurs (P) gauche et droit.

9. Procédé de montage d'un ensemble comprenant un élément de structure (10) de véhicule formant support de face avant et d'une paire de projecteurs (P), **caractérisé en ce qu'**il comprend les étapes suivantes :
- montage des projecteurs (P) sur ledit élément de structure (10) en laissant auxdits projecteurs au moins un degré de liberté selon une direction respective donnée (Y), chaque projecteur étant alors assujetti à l'action d'un moyen élastique respectif (50) le sollicitant dans ladite direction respective donnée,
- montage de l'ensemble ainsi obtenu dans la carrosserie (C) du véhicule, ladite carrosserie sollicitant au cours de ce montage les projecteurs à l'encontre des sollicitations exercées par lesdits moyens élastiques respectifs (50) pour amener lesdits projecteurs dans des positions de référence données.

10. Procédé selon la revendication 9, **caractérisé en ce que** lesdites directions respectives données sont une même direction (Y) généralement horizontale et transversale à l'axe du véhicule.

11. Procédé selon la revendication 10, **caractérisé en ce que** la sollicitation des projecteurs au cours de l'étape de montage de l'ensemble est réalisée par des aménagements (21) formés sur des parties d'aile de la carrosserie (C) de façon respectivement adjacente aux bords extérieurs des glaces (G) des projecteurs.

12. Procédé selon l'une des revendications 9 à 11, **caractérisé en ce que** ladite étape de montage des projecteurs s'effectue par translation et accrochage selon une direction (X) différente de chaque direction respective donnée.

13. Procédé selon la revendication 12, **caractérisé en ce que** la translation de chaque projecteur est effectuée jusqu'à une position de butée constituant une position de référence du projecteur (P) selon ladite direction différente (X).

## Claims

1. Assembly consisting of a vehicle structural element (10) and a headlight (P) of the said vehicle, **characterized in that**:
- the said structural element (10) is separate from the bodywork (C) of the vehicle and able to be attached to it;
- the said structural element is a front panel support;
- the structural element and the headlight have corresponding fittings (1234, 32) for the mounting of the headlight on the said structural element while allowing the said headlight at least a degree of freedom of movement in a given direction (Y);
- the headlight (P) and the bodywork (C) have corresponding stop fittings (31, 21) defining a reference position of the headlight in the said given direction (Y), and
- an elastic means (50) is provided, operating between the said structural element (10) and the said headlight to push the headlight in the said given direction against the opposing force of the said stop fittings on the headlight.

2. Assembly according to Claim 1, **characterized in that** the said given direction (Y) is a direction which is generally horizontal and transverse to the axis of the vehicle.

3. Assembly according to Claim 2, **characterized in that** the ,said corresponding stop fittings comprise a fitting (21) made on a portion of the wing of the bodywork (C) such that it is adjacent to an outside edge of a headlight glass (G).

4. Assembly according to any one of Claims 1 to 3, **characterized in that** the said corresponding mounting fittings comprise fixing lugs (32) made on the headlight and cooperating with fixing holes (1234) made in corresponding areas of the structural element (10).

5. Assembly according to Claim 4, **characterized in that** secondary corresponding stop fittings (41-44; 1231, 1232) are also provided, defining a reference position of the headlight in a second given direction (X) and able to come into play when the said corresponding mounting fittings are used.

6. Assembly according to any one of Claims 1 to 5, **characterized in that** the elastic means (50) consists of a blade-spring mounted on the structural element (10).

7. Assembly according to any one of Claims 1 to 5, **characterized in that** the elastic means (50) consists of a blade-spring made in one piece with the structural element (10).

8. Assembly according to any one of Claims 1 to 7, **characterized in that** the structural element (10) is a vehicle front panel support and receives a pair of headlights (P), left-hand and right-hand.

9. Method for mounting an assembly comprising a vehicle structural element (10) forming a front panel support and a pair of headlights (P), **characterized in that** it comprises the following steps:
- mounting of the headlights (P) on the said structural element (10) while allowing the said headlights at least a degree of freedom of movement in a given respective direction (Y), each headlight being then subject to the action of a respective elastic means (50) pushing it in the said given respective direction;
- mounting of the assembly thus obtained in the bodywork (C) of the vehicle, the said bodywork pushing the headlights in the course of this mounting against the forces exerted by the said respective elastic means (50) in order to bring the said headlights into the given reference positions.

10. Method according to Claim 9, **characterized in that** the said given respective directions are the same direction (Y) which is generally horizontal and transverse to the axis of the vehicle.

11. Method according to Claim 10, **characterized in that** the pushing of the headlights in the course of the assembly mounting step is carried out by fittings (21) made on the portions of the wing of the bodywork (C) such that they are respectively adjacent to the outer edges of the headlight glasses (G).

12. Method according to any one of Claims 9 to 11, **characterized in that** the said headlight mounting step is carried out by translation and fixing in a different direction (X) from each given respective direction.

13. Method according to Claim 12, **characterized in that** the translation of each headlight is carried out as far as a stop position constituting a reference position of the headlight (P) in the said different direction (X).

## Patentansprüche

1. Anordnung aus einem Fahrzeugstrukturelement (10) und einem Scheinwerfer (P) des Fahrzeugs, **dadurch gekennzeichnet, dass**
das Strukturelement (10) von der Karosserie (C) des Fahrzeugs getrennt ist und an dieser aufgesetzt werden kann,
das Strukturelement eine Vorderseitenstütze ist,
das Strukturelement und der Scheinwerfer entsprechende Einrichtungen (1234, 32) besitzen, um den Scheinwerfer an das Strukturelement zu montieren, wobei dem Scheinwerfer mindestens ein Freiheitsgrad gemäß einer gegebenen Richtung (Y) belassen wird,
der Scheinwerfer (P) und die Karosserie (C) entsprechende Anschlageinrichtungen (31, 21) besitzen, die eine Bezugsposition des Scheinwerfers gemäß der gegebenen Richtung (Y) definieren, und
ein elastisches Mittel (50) vorgesehen ist, das zwischen dem Strukturelement (10) und dem Scheinwerfer wirkt, um den Scheinwerfer in der gegebenen Richtung gegen die Reaktionskraft der Anschlageinrichtungen auf den Scheinwerfer zu beaufschlagen.

2. Anordnung nach Anspruch 1, **dadurch gekennzeichnet, dass** die gegebene Richtung (Y) eine allgemein horizontale und zur Achse des Fahrzeugs quer verlaufende Richtung ist.

3. Anordnung nach Anspruch 2, **dadurch gekennzeichnet, dass** die entsprechenden Anschlageinrichtungen eine Einrichtung (21) umfassen, die auf einem Kotflügelteil der Karosserie (C) neben einem Außenrand einer Scheibe (G) des Scheinwerfers ausgebildet ist.

4. Anordnung nach einem der Ansprüche 1 bis 3, **dadurch gekennzeichnet, dass** die entsprechenden Montageeinrichtungen Einhängehaken (32) umfassen, die an dem Scheinwerfer ausgebildet sind und mit Einhängeöffnungen (1234) zusammenwirken, die in entsprechenden Bereichen des Strukturelements (10) ausgebildet sind.

5. Anordnung nach Anspruch 4, **dadurch gekennzeichnet, dass** auch zweite entsprechende Anschlageinrichtungen (41 - 44; 1231, 1232) vorgesehen sind, die eine Bezugsposition des Scheinwerfers gemäß einer zweiten gegebenen Richtung (X) definieren und beim Einsatz der entsprechenden Montageeinrichtungen wirksam werden können.

6. Anordnung nach einem der Ansprüche 1 bis 5, **dadurch gekennzeichnet, dass** das elastische Mittel (50) aus einer an das Strukturelement (10) montierten Blattfeder besteht.

7. Anordnung nach einem der Ansprüche 1 bis 5, **dadurch gekennzeichnet, dass** das elastische Mittel (50) aus einer mit dem Strukturelement (10) einstückigen Blattfeder besteht. '

8. Anordnung nach einem der Ansprüche 1 bis 7, **dadurch gekennzeichnet, dass** das Strukturelement (10) eine Vorderseitenstütze darstellt und ein Paar linker und rechter Scheinwerfer (P) aufnimmt.

9. Verfahren zur Montage einer Anordnung, die ein eine Vorderseitenstütze bildendes Fahrzeugstrukturelement (10) und ein Paar Scheinwerfer (P) umfasst, **dadurch gekennzeichnet, dass** es die folgenden Schritte umfasst:
- Montage der Scheinwerfer (P) an das Strukturelement (10), wobei den Scheinwerfern mindestens ein Freiheitsgrad gemäß einer jeweiligen gegebenen Richtung (Y) belassen wird, wobei jeder Scheinwerfer dann der Wirkung eines jeweiligen elastischen Mittels (50) unterworfen wird, das ihn in die jeweilige gegebene Richtung beaufschlagt,
- Montage der so erhaltenen Anordnung an die Karosserie (C) des Fahrzeugs, wobei die Karosserie die Scheinwerfer während dieser Montage gegen die Beaufschlagungen, die durch die jeweiligen elastischen Mittel (50) ausgeübt werden, beaufschlagt, um die Scheinwerfer in gegebene Bezugspositionen zu bringen.

10. Verfahren nach Anspruch 9, **dadurch gekennzeichnet, dass** die jeweiligen gegebenen Richtungen ein und dieselbe allgemein horizontale und quer zur Achse des Fahrzeugs verlaufende Richtung (Y) sind.

11. Verfahren nach Anspruch 10, **dadurch gekennzeichnet, dass** die Beaufschlagung der Scheinwerfer während des Montageschritts der Anordnung durch Einrichtungen (21) erfolgt, die auf Kotflügelteilen der Karosserie (C) jeweils neben den Außenrändern der Scheiben (G) der Scheinwerfers ausgebildet sind.

12. Verfahren nach einem der Ansprüche 9 bis 11, **dadurch gekennzeichnet, dass** der Montageschritt der Scheinwerfer durch Translation und Einhängen gemäß einer von jeder jeweils gegebenen Richtung verschiedenen Richtung (X) erfolgt.

13. Verfahren nach Anspruch 12, **dadurch gekennzeichnet, dass** die Translation jedes Scheinwerfers bis zu einer Anschlagposition erfolgt, die eine Bezugsposition des Scheinwerfers (P) gemäß der verschiedenen Richtung (X) darstellt.
